## Europäisches Patentamt

(19) 

## European Patent Office

## Office européen des brevets

(11) Veröffentlichungsnummer: **0 134 831 B1**

(12) **EUROPÄISCHE PATENTSCHRIFT**

(45) Veröffentlichungstag der Patentschrift:
07.01.87

(21) Anmeldenummer: 83109176.4

(22) Anmeldetag: 16.09.83

(51) Int. Cl.⁴: **G 06 F 9/38**

(54) Einrichtung im Befehlswerk eines Fliessbandprozessors zur Befehlsunterbrechung und -wiederholung.

(43) Veröffentlichungstag der Anmeldung:
**27.03.85 Patentblatt 85/13**

(45) Bekanntmachung des Hinweises auf die Patenterteilung:
**07.01.87 Patentblatt 87/2**

(84) Benannte Vertragsstaaten:
**AT DE FR GB**

(56) Entgegenhaltungen:
**FR - A - 2 260 138**

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk,
N.Y. 10504 (US)**

(84) Benannte Vertragsstaaten: **FR GB AT**

(72) Erfinder: **Chilinski, Herbert, Ing. (grad.),
Schwabenstrasse 97, D-7036 Schönaich (DE)**
Erfinder: **Getzlaff, Klaus J., Ing. (grad.), Freisenweg 26,
D-7036 Schönaich (DE)**
Erfinder: **Hajdu, Johann, Ing. (grad.),
Bergamastrasse 77, D-7030 Böblingen (DE)**
Erfinder: **Richter, Stephan, Ing. (grad.),
Waldburgstrasse 5, D-7030 Böblingen (DE)**

(74) Vertreter: **Jost, Ottokarl, Dipl.-Ing., Schönaicher
Strasse 220, D-7030 Böblingen (DE)**

## Beschreibung

Die Erfindung betrifft eine Einrichtung im Befehlswerk eines Fliessbandprozessors zur Befehlsunterbrechung in Abhängigkeit von dem Auftreten eines Ereignisses, das eine solche Unterbrechung erfordert und zur Befehlswiederholung nach Auflösung des Ereignisses.

Bei der Befehlsverarbeitung in Datenverarbeitungsanlagen ist es nicht immer möglich, diese Befehlsverarbeitung unterbrechungsfrei durchführen zu können, da besondere, im folgenden Ereignisse genannte Situationen auftreten können, die eine kurzfristige Unterbrechung erfordern, um zunächst die durch diese Ereignisse bedingten Operationen durchzuführen, bevor die unterbrochene Befehlsverarbeitung weitergehen kann.

Im vorliegenden Fall ist nicht in erster Linie das sequentielle Weitermachen an der Unterbrechungsstelle mit dem Folgebefehl gemeint, sondern vielmehr die Weiterverarbeitung einschliesslich einer Wiederholung des letzten Befehls, in dem das Ereignis festgestellt wurde, und der auch unterbrochen wurde, bevor er beispielsweise mit der Abspeicherung eines durch ihn gewonnenen Ergebnisses beendet wurde, weil dieser Befehl Information benötigt, die erst mit der Ausführung des Ereignisses bereitgestellt werden kann.

Ein typischer Fall einer solchen Situation tritt beispielsweise bei Datenverarbeitungsanlagen mit einem Hauptspeicherpuffer auf, der als Zwischenspeicher zwischen den Hauptspeicher und die Verarbeitungseinheit geschaltet ist. Ein Directory genanntes Verzeichnis vermerkt stets die Adresse der im Hauptspeicherpuffer befindlichen Daten. Bei jedem Zugriff des Prozessors zum Hauptspeicherpuffer wird auch das Verzeichnis abgefragt, ob die benötigten Daten sich auch in dem Hauptspeicherpuffer befinden, so dass sie von diesem für die Ausführung des Befehls bereitgestellt werden können. Wird die gerade benutzte Adresse mit den benötigten Daten im Verzeichnis nicht gefunden, so müssen zunächst die Daten vom Hauptspeicher in den Hauptspeicherpuffer geladen werden, was auch wiederum einen neuen Eintrag in das Verzeichnis zur Folge hat. Erst jetzt kann die Befehlsverarbeitung mit dem Wiederholen des letzten Befehls wiederaufgenommen werden.

Diese Befehlswiederholung ist aber nur möglich, wenn der Inhalt des Operationsregisters, in dem der Befehl steht, das sind im wesentlichen der Operationscode und die Operandenadressen sowie gegebenenfalls Zusatzinformation, die im Befehl noch enthalten sein kann, während der Unterbrechung aufbewahrt wird. Bekannte Datenverarbeitungsanlagen verwenden hierzu Rückgriffregister, deren Zahl vom Grad der überlappenden Befehlsverarbeitung abhängt und die das Zurückfinden zu dem zu wiederholenden Befehl und das Wiederherstellen der Quellendaten ermöglichen.

Neben diesem an sich unerwünschten Mehraufwand an Bauelementen kommt es durch diese Art der Befehlswiederholung auch noch zu einem signifikanten Zeitverlust, da der gesamte Befehl, der zu seiner Ausführung ein bis mehrere Takte (Befehlszyklen) erfordert, wiederholt werden muss.

Die Erfindung hat sich daher die Aufgabe gestellt, die Behandlung besonderer Ereignisse, die eine Befehlswiederholung erfordern, so vorzunehmen, dass einerseits keine zusätzlichen Rückgriffregister erforderlich sind und andererseits der Zeitverlust, der sich aus einer Befehlswiederholung ergibt, so klein wie möglich gehalten wird.

Gelöst wird diese Aufgabe der Erfindung durch die im Hauptanspruch angegebenen Merkmale.

Weitere vorteilhafte Ausgestaltungen und Weiterbildungen des Gegenstandes der Erfindung sind den Unteransprüchen zu entnehmen.

Durch die vorliegende Erfindung wird also der Vorteil erzielt, dass die Behandlung besonderer Ereignisse, die eine Befehlsunterbrechung in der Datenverarbeitungsanlage erfordern, ohne zusätzliche Rückgriffregister vorgenommen werden kann und darüber hinaus die Zeitverzögerung, die sich aus der Befehlswiederholung ergibt, so gering wie möglich gehalten wird.

Im folgenden wird die Erfindung anhand eines durch Zeichnungen erläuterten Ausführungsbeispiels näher beschrieben. Es zeigen:

Fig. 1 ein Diagramm zur Veranschaulichung der überlappenden Befehlsverarbeitung,

Fig. 2 eine Prinzipdarstellung eines Master-/Slave-Flipflops,

Fig. 3 ein Blockschaltbild zur Erläuterung der überlappenden Befehlsverarbeitung,

Fig. 4 ein Blockschaltbild eines Teils des Befehlswerkes, in dem die Erfindung Verwendung findet und

Fig. 5 ein Diagramm zur Darstellung der Arbeitsweise der Anordnung nach Fig. 3.

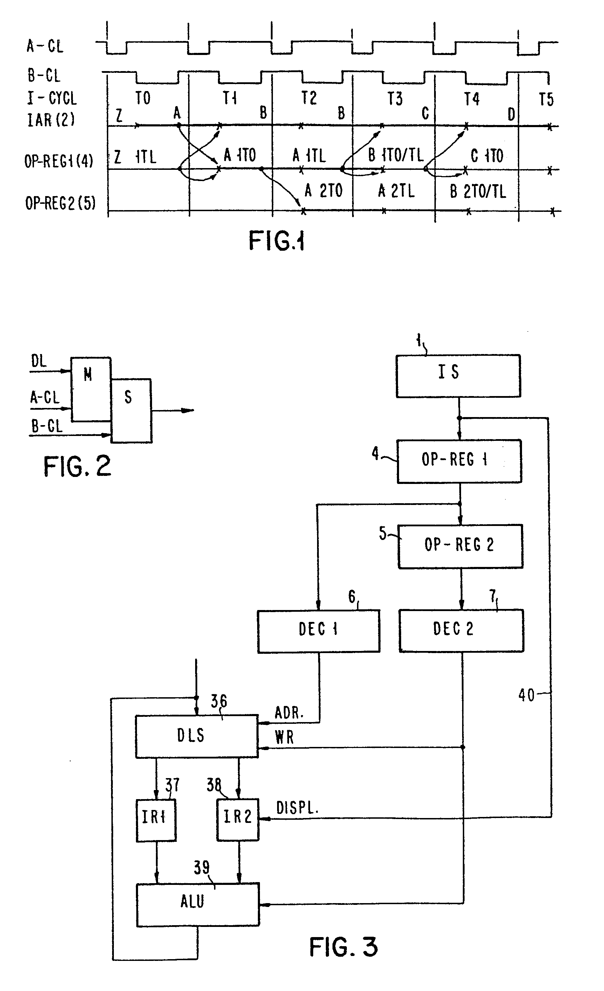

Als Beispiel ist eine überlappende Befehlsverarbeitung angenommen, wie sie Fig. 1 zeigt. In den Zeilen 1 und 2 von oben dieser Figur ist die zeitliche Lage der A- und B-Takte A-CL und B-CL hinsichtlich des Befehlstaktes oder Befehlszyklus I-CYCL, der fortlaufend in Zeile 3 mit T0 bis T5 bezeichnet ist, dargestellt. Diese A- und B-Takte dienen vorwiegend dem Betrieb der Master-/Slave-Flipflops (Fig. 2), aus denen im wesentlichen die Prozessorlogik aufgebaut ist.

In der Befehlsstruktur der meisten Datenverarbeitungsanlagen gibt es Befehle unterschiedlicher Länge, d.h. es gibt Befehle, die ein bis mehrere Befehlszyklen für ihre Verarbeitung benötigen. Die Befehlsverarbeitung wiederum erfolgt im allgemeinen in zwei Phasen, der Befehlsphase, I-Phase, und der Ausführungsphase, E-Phase, wobei bei einem nicht direkt, sondern interpretativ ausführbaren Befehl in der Befehlsphase innerhalb von drei Befehlszyklen der Hauptspeicher oder dessen Zwischenspeicher ausgelesen wird, um den Befehl zu holen, der Steuerspeicher ausgelesen wird, um den steuernden Mikrobefehl zu holen und der Mikrobefehl decodiert wird. Diese Decodierung leitet die eigentliche Ausführungsphase des Befehls ein, die sich innerhalb von vier Befehlszyklen vollzieht. Diese sind das Auslesen des ersten Operanden, das Auslesen des zweiten Operanden mit jeweiliger Übertragung der Operanden in die Eingangsregister einer arithmetischen und logischen Einheit ALU, der eigentlichen arithmetischen oder logischen Verarbeitung der Operanden und der Abspeicherung des Resultats an einem definierten Speicherort.

Bei einem Fliessbandprozessor, d.h. bei einem Prozessor mit überlappender Befehlsverarbeitung, kann pro Befehlszyklus Ti eine Teilverarbeitung von mehreren Befehlen, je nach dem Grad der Überlappung, durchgeführt werden. Bei dem in Fig. 3 gewählten Beispiel mit zwei Operationsregistern OP-REG1 und OP-REG2 sind nach einem bestimmten Vorlauf pro Befehlszyklus Ti Teilverarbeitungen dreier verschiedener sequentieller Befehle möglich. Ausgehend von einem ersten Befehlszyklus T0 wird der Befehl mit der im Befehlsregister IAR befindlichen Befehlsadresse, beispielsweise A, aus dem Befehlsspeicher ausgelesen. Im nächsten Befehlszyklus T1, dem zweiten, werden beide Operanden geholt, und gleichzeitig wird der nächste Befehl mit der Befehlsadresse B aus dem Befehlsspeicher geholt.

Im dritten Befehlszyklus T2 werden die Operanden arithmetisch oder logisch in der ALU miteinander verknüpft und das Resultat in einem vorgegebenen Register oder einer vorgegebenen Stelle eines Speichers abgespeichert, es wird ferner das nächste Operandenpaar geholt und gleichzeitig der nächste Befehl, also der dritte, aus dem Befehlsspeicher abgerufen.

Ein erfolgreicher Verzweigungsbefehl würde das auf diese Weise aufgebaute Fliessband unterbrechen und ein neues Fliessband aufbauen. Auch hier ergibt sich ein Vorlauf von zwei Befehlszyklen, um das Fliessband bei einer 3-fach-Überlappung aufzufüllen.

Die in Fig. 3 dargestellten beiden Operationsregister (OP-REG1, OP-REG2) 4 und 5 dienen der überlappten Befehlsverarbeitung, wobei OP-REG1 (4) die Quelle und OP-REG2 (5) das Ziel auswählt. Unter Quelle sind die Operanden oder andere Daten (z.B. eine Adresse) zu verstehen, die zu verarbeiten sind. Ziel bedeutet diejenigen Komponenten der Datenverarbeitungsanlage, welche das Resultat erzeugen und den Bestimmungsort festlegen, an den das Resultat übertragen wird.

Der in Fig. 3 dargestellte Datenfluss des Prozessors zeigt, dass der Befehlsspeicher (IS) 1 hintereinander die Befehle an das Operationsregister OP-REG1 (4) überträgt. Dieses Operationsregister 4 überträgt im nachfolgenden Befehlszyklus den in ihm gespeicherten Befehl in das Operationsregister OP-REG2 (5), so dass es erneut mit dem nächsten Befehl aus dem Befehlsspeicher 1 geladen werden kann. Mit dem Ausgang des jeweiligen Operationsregisters 4 und 5 ist jeweils ein Operationsdecodierer (DEC1) 6 und (DEC2) 7 verbunden.

Wie ferner zu erkennen ist, selektiert der Befehl im Operationsregister 4 über den Operationsdecodierer 6 die Quelle, das sind die Register im Datenarbeitsspeicher (DLS) 36. Der im Operationsregister 5 befindliche Befehl selektiert über den Operationsdecodierer 7 das Ziel, im vorliegenden Fall die Eingangsregister (IR1, IR2) 37 und 38 der arithmetischen und logischen Einheit (ALU) 39.

Wenn ein Befehl in das Operationsregister 4 gelangt, dann werden die Operanden aus dem Datenarbeitsspeicher 36 geholt. Hierzu werden beispielsweise die Inhalte zweier allgemeiner Register oder eines Basisregisters und ein Verlagerungswert in die Eingangsregister 37 und 38 der arithmetischen und logischen Einheit 39 eingelesen. Der Inhalt des Basisregisters und der Verlagerungswert werden vom Befehlsspeicher 1 direkt über eine eigene Verbindung 40 übertragen.

Im nächsten Befehlszyklus überträgt das Operationsregister 4 seinen Inhalt in das Operationsregister 5, der das Ziel auswählt, beispielsweise die Funktion der arithmetischen und logischen Einheit 39 sowie das Resultatregister, während gleichzeitig das Operationsregister 4 den nächsten Befehl empfängt und die nächste Quelle auswählt.

Eine Überlappung tritt auch auf der DLS/ALU-Seite des Prozessors auf. Der DLS liest die nächsten Operanden aus, während die aktuellen Operanden in der ALU ein Ergebnis erzeugen. Diese Überlappung ist das grundlegende Prinzip von Fliessbandrechnern, das hauptsächlich wegen der dreifachen Ansteuerung des DLS möglich ist. Für Befehle, die Speicheroperanden benutzen, dient die separate Verbindung 40 direkt zur Berechnung der Basisregister und des Verlagerungswertes, die ebenfalls mit anderen Verarbeitungsaktionen überlappt abläuft.

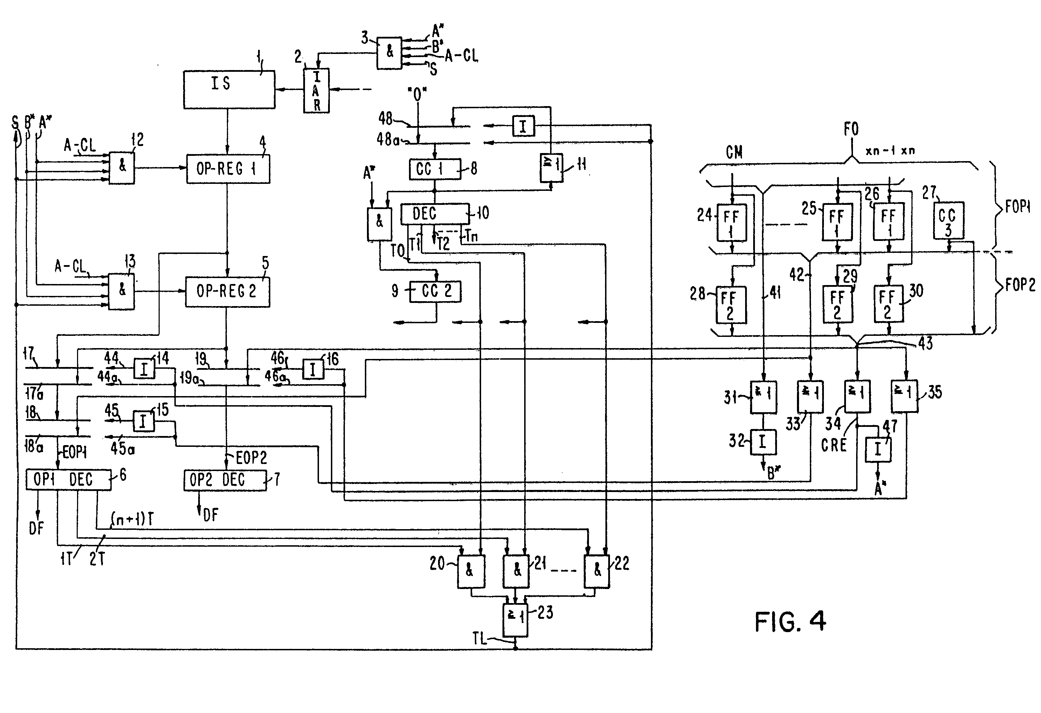

Wie Fig. 4 zeigt, sind den Operationsregistern 4 und 5 eigene Befehlszyklenzähler (CC1 und CC2) 8 und 9 für spezielle Steuerungsoperationen zugeordnet. Somit bewirkt das Operationsregister 4 gemeinsam mit dem Befehlszyklenzähler 8, der die Takte 1Ti liefert, die Steuerung der Quellenauswahl, während das Operationsregister 5 in Verbindung mit dem Befehlszyklenzähler 9, der die Takte 2Ti liefert, die Steuerung der Zielmodifizierung.

Fig. 1 lässt erkennen, dass im ersten Befehlszyklus T0 der Befehl mit der Adresse A, die sich im Instruktionsadressenregister 2 befindet, der Befehl geholt und in das Operationsregister 4 gebracht wird. Dieses erfolgt im zweiten Zyklus T1, der aber hinsichtlich des Zyklenzählers 8 der erste Befehlszyklus ist (1T0). Da es sich aber um eine zweizyklische Instruktion handelt, muss der dem Operationsregister 4 zugeordnete Befehlszykluszähler 8 noch einen weiteren Takt erzeugen, dieser wird mit 1TL bezeichnet.

Mit dem entsprechenden zeitlichen Versatz trifft diese Steuerung auch für das Operationsregister 5 zu. Der Befehlszykluszähler 9 erzeugt ebenfalls zwei Takte, nämlich 2T0 und 2TL.

Ausgehend von dem vorstehend beschriebenen Maschinenkonzept wird nun der eigentliche Erfindungsgedanke erläutert. Ein Ereignis, wie beispielsweise die Nichtverfügbarkeit eines Operanden im Hauptspeicherpuffer könnte während des Befehlszyklus A 2TL auftreten. Es kommt nun darauf an, nicht den gesamten Befehl mit der Adresse A nach der Auflösung des Ereignisses, also wenn der Hauptspeicherpuffer wieder in der Lage ist, den benötigten Operanden zu liefern, zu wiederholen, sondern nur die letzten Befehlszyklen A 1 TL und A 2TL, wodurch sich nur ein sehr geringer Zeitverlust gegenüber einer Wiederholung des gesamten Befehls, also aller Befehlszyklen ergibt, weshalb auch die Befehlsadresse A nicht mehr benötigt wird. Dies hat zur Folge, dass Rückgriffregister weder für die Befehlsadresse noch für die Operanden erforderlich sind.

Die Wiederholung der Befehlszyklen A 1 TL und A 2TL ohne zusätzliche Rückgriffregister wird dadurch erreicht, dass das entsprechende Ereignissignal, beispielsweise das zuvor erwähnte Ereignis, in dem der Hauptspeicherpuffer den gewünschten Operanden nicht zur Verfügung hat, das in Fig. 4 mit CM bezeichnet ist, sofort den Inhalt des Befehlsadressenregisters 2 und der Operationsregister 4 und 5 festhält (einfriert). Die Inhalte dieser Register bleiben bis einschliesslich der Wiederholung von A 1 TL festgehalten (eingefroren).

Ferner ist es erforderlich, dass nach der Auflösung des Ereignisses, d.h. wenn der gewünschte Operand aus dem Hauptspeicher in den Hauptspeicherpuffer nachgeladen wurde und somit für die Ausführung des Befehls zur Verfügung steht, das Operationsregister 5 und auch der Befehlszykluszähler 9 für die Dauer eines Befehlszyklus auf den Ausgang des Operationsregisters 4 und den zugehörigen Befehlszykluszähler 8 geschaltet wird.

Aus dieser Umschaltung resultieren weitere Vorteile, da durch das Abschalten der Ausgänge der beiden Operationsregister während der Auflösung des Ereignisses keine Steuersignale mehr von den Ausgängen dieser abgeschalteten Operationsregister aus aktiviert werden. Ferner ist es vorteilhaft, alle Ereignisfunktionen anstelle der Inhalte der Operationsregister auf deren Ausgänge zu schalten, wodurch eine optimale Verteilung auf die einzelnen Decodiererfunktionen erreicht wird, was insgesamt zu weniger Anschlusspunkten führt.

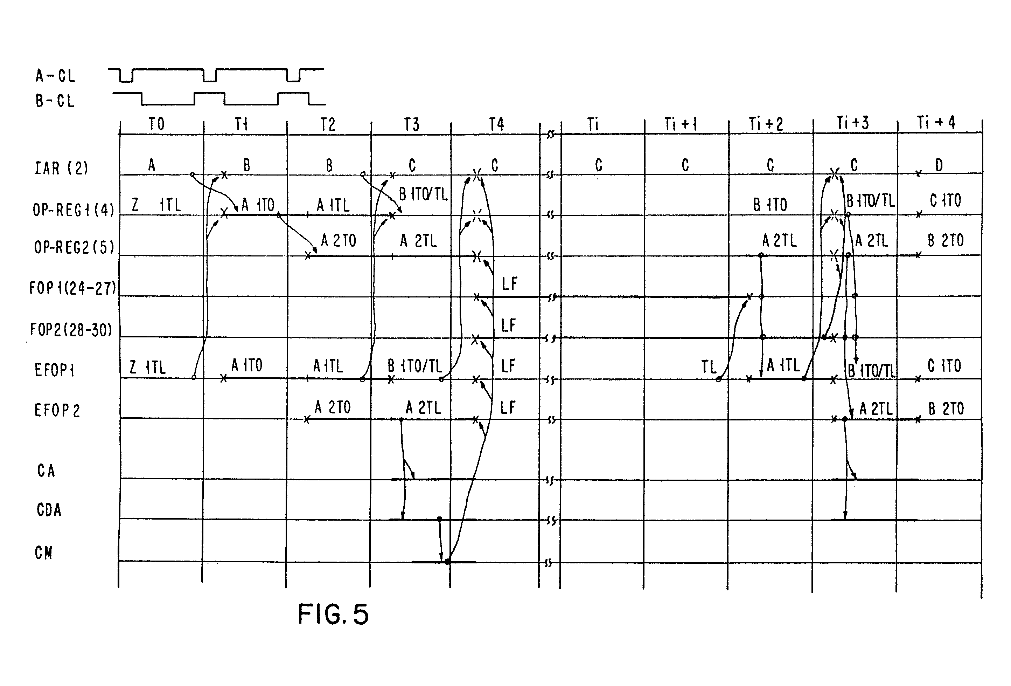

Der in Fig. 4 dargestellte Ausschnitt aus dem Befehlswerk der Datenverarbeitungsanlage zeigt nun die Schaltkreisstruktur und in Verbindung mit Fig. 5 auch die Wirkungsweise der Erfindung näher im Detail.

Zur Befehlszykluszeit T0 befindet sich die Befehlsadresse A im Befehlsadressenregister (IAR) 2. Im nächsten Befehlszyklus T1 wird der Befehl aus dem Befehlsspeicher 1 in das Operationsregister 4 eingelesen und gleichzeitig die nächste Befehlsadresse B in das Befehlsadressenregister 2 eingelesen. Ausserdem steht der nun im Operationsregister 4 befindliche Befehl, der ein zweizyklischer Befehl ist, als effektive Operation EOP1, verknüpft mit der Befehlszykluszeit T0 seines zugeordneten Befehlszyklenzählers (CC1) 8, in der allgemeinen Schreibweise A 1T0, zur Verfügung. Im Decodierer 6 wird diese effektive Operation EOP1 decodiert, und es werden Datenflusssteuersignale DF erzeugt, welche die Befehlsphase I-PH des Befehls steuern. Der Befehl gelangt deshalb vom Operationsregister 4 zum Operationsdecodierer (OP 1 DEC) 6, weil die Torschaltungen 17 und 18 durchgeschaltet sind. Dies ist deshalb der Fall, weil zum betrachteten Zeitpunkt kein Ereignis aufgetreten ist, das die Durchführung einer erzwungenen Operation einschliesslich einer Befehlswiederholung erfordern würde. Da also keine Signale CM bzw. Xn−1 und/oder Xn für die Anforderung erzwungener Operationen FO vorliegen, führen auch die mehradrigen Leitungen 41, 42 und 43 ein der binären 0 entsprechendes Signal. Die Zahl der Adern in der Leitung 41 entspricht der Zahl der verschiedenen möglichen Ereignissignale. Die Zahl der Adern in der Leitung 42 hängt von der Zahl der Ereignissignale ab, da jedes Ereignissignal auch zu einem Flipflop 1 und parallel dazu zu einem Flipflop 2 übertragen wird, wobei die Leitung 42 die Ausgänge des Flipflop 1 (24 bis 26) überträgt sowie die Ausgänge des Befehlszyklenzählers (CC3) 27. Die Leitung 43 schliesslich enthält ebenso viele Adern wie die Leitung 42, da auch hier die Ausgänge der Flipflops 2, nämlich 28 bis 30 sowie die Ausgangsleitungen des Zyklenzählers 3 über diese Leitung 43 geführt sind.

Die parallel in den Flipflops 1 jeweils gespeicherten Signale bilden, gegebenenfalls nach einer Kombination mit weiteren Modusbits, ein Datenflusssteuerwort FOP1 für erzwungene Operationen so wie auch die parallel in den Flipflops 2, nämlich 28 bis 39 gespeicherten Daten, ebenfalls kombiniert mit Modusbits, das Steuerwort FOP2 für erzwungene Operationen bilden, die auf die entsprechenden Decodierer 6 und 7 geschaltet, die Durchführung erzwungener Operationen in Verbindung mit dem Befehlszykluszähler 27 steuern.

Die Adern der genannten Leitungen 41 bis 43 sind für Steuerzwecke über ODER-Glieder 31, 33, 34 und 35 zusammengefasst, wobei der Ausgang des ODER-Gliedes 31 über einen Inverter 32 geführt ist, dessen Ausgang mit B* bezeichnet ist. Der Ausgang des Inverters 47 trägt die Bezeichnung A*. Die genannten Ausgänge sind auch zu den Eingängen der UND-Glieder 3, 12 und 13 geführt. A* steuert ferner noch das UND-Glied 48.

Diese genannten UND-Glieder 3, 12 und 13 verfügen ferner über zwei weitere Eingänge, von denen der eine mit dem Einstellsignal S und der andere mit dem Taktsignal A-CL gespeist wird.

Das UND-Glied 3 steuert über seinen Ausgang das Befehlsadressenregister 2, so dass dieses im nächsten Befehlszyklus mit einer neuen Befehlsadresse geladen werden kann. Eine solche Ladung unterbleibt allerdings, wenn die Koinzidenzbedingungen für dieses UND-Glied 3 nicht erfüllt sind.

In ähnlicher Weise bewirken die UND-Glieder 12 und 13 das Laden bzw. das Unterbleiben der Ladung der Operationsregister 4 und 5.

In normalen Betrieb gelangt der Befehl, nachdem er im ersten Befehlszyklus, beispielsweise T0, dargestellt in der dritten Zeile von oben in Fig. 5, mit der Adresse A ausgelesen wurde, im zweiten Befehlszyklus T1 in das Operationsregister 4 bei nicht gesperrter Torschaltung 12, und vom Ausgang des Operationsregisters 4 über die Torschaltungen 17 und 18 als effektive Operation EOP1 in den Operationsdecodierer 6. Da keine Ereignissignale CM, ..., Xn−1 und Xn vorliegen, erzeugen

die Ausgänge der ODER-Glieder 31, 33, 34 und 35 ein der binären Null entsprechendes Signal. Das Ausgangssignal des ODER-Gliedes 34 liegt am Eingang des Inverters 14 und wird zu einem der binären Eins entsprechenden Signal invertiert, das am Steuereingang 44 der Torschaltung 17 anliegt und diese durchschaltet. In ähnlicher Weise liegt das Ausgangssignal des ODER-Gliedes 33 am Eingang des Inverters 15, so dass dieser über den Steuereingang 45 die Torschaltung 18 durchschaltet.

Der Befehl mit der Adresse A, der sich im Operationsregister 4 befindet, ist, wie Fig. 5 in der fortlaufenden Numerierung des Befehlszyklus T1 zeigt, mit der Befehlszykluszeit 1T0 des Befehlszählers 8 verknüpft. Die Befehlszykluszeit T0 des Befehlszählers 8 ist in Fig. 5 mit 1T0 bezeichnet.

Im nächsten fortlaufend numerierten Befehlszyklus T2 gelangt der Befehl in das Operationsregister 5 und ist dort mit der Befehlszykluszeit T0 des Befehlszyklenzählers 9 verknüpft. In Fig. 5 ist diese Zykluszeit mit 2T0 bezeichnet.

Da angenommen wird, dass immer noch kein Ereignis aufgetreten ist, ist auch über den Inverter 16 und den Steuereingang 46 die Torschaltung 19 durchgeschaltet, so dass der Befehl als effektive Operation EOP2 in den Decodierer 7 gelangt. Das Eingangssignal des Inverters 16 wird vom Ausgang des ODER-Gliedes 35 abgeleitet.

Der Operationsdecodierer 6 verfügt auch über eine Schaltkreisanordnung, die, neben den Datenfluss-Torsteuersignalen DF, auch Ausgangssignale 1T, 2T, ..., (n+1)T erzeugt, welche die Zykluslänge des jeweils decodierten Befehls angeben. 1T bedeutet, dass es sich um einen Befehl von der Länge eines Befehlszyklus T handelt, der auf der Ausgangsleitung des Decodierers 6, die mit 1T bezeichnet ist, ein Ausgangssignal liefert. In ähnlicher Weise werden auch Befehle anderer Befehlszyklenlänge gekennzeichnet.

Wie Fig. 5 zeigt, handelt es sich beim Befehl mit der Adresse A um einen zwei Befehlszyklen langen Befehl, dessen letzter Zyklus TL dem zweiten Befehlszyklus T1 des Decodierers 10 entspricht. Die Schaltungsanordnung, bestehend aus den Komponenten 10, 20, 21, 22 und 23 erzeugt das Signal TL, das dem letzten Befehlszyklus eines Befehls entspricht, gleichgültig wie lang dieser Befehl ist. Dieses Steuersignal TL dient, wie Fig. 4 zeigt, in Verbindung mit dem UND-Glied 3 der Übernahme einer neuen Befehlsadresse in das Befehlsregister 2 sowie in Verbindung mit den UND-Gliedern 12 und 13 der Übernahme neuer Befehle in die Operationsregister 4 und 5.

Wie Fig. 5 weiter zeigt, tritt im Befehlszyklus T3 (fortlaufende Numerierung) ein Ereignis auf, das mit CM bezeichnet ist und bedeutet, dass ein für die Ausführung des Befehls benötigter Operand nicht im Hauptspeicherpuffer verfügbar ist. Dieses Ereignis ist feststellbar dadurch, dass ein Zugriff zu diesem Pufferspeicher erfolgt (Steuersignal CA) und das Pufferspeicherverzeichnis durchsucht wird (Signal CDA), allerdings erfolglos. Bis zu diesem Zeitpunkt, der im Befehlszyklus T3 liegt, konnten wegen des allmählichen Aufbaus des Fliessbandes nicht während jedes Befehlszyklus neue Befehlsadressen in das Befehlsadressenregister 2 geladen werden. Somit befindet sich erst die Adresse C des dritten Befehls im Befehlsadressenregister 2. Zum Zeitpunkt des Auftretens des Ereignisses CM befindet sich also im Operationsregister 4 der Befehl mit der Adresse B, und im zugehörigen Befehlszyklenzähler 8 wird die Zykluszeit 1T0 bzw. 1TL angezeigt, weil es sich bei diesem Befehl um einen einzykligen Befehl handelt. Im Operationsregister 5 befindet sich der Befehl mit der Adresse A, bei einer Stellung des Befehlszykluszählers 9 auf 2TL.

Aufgrund der um eine Befehlszykluszeit versetzten Kopplung der Befehlszyklenzähler 8 und 9–9 wird vom Ausgang von 8 geladen, bevor dieser entweder über den Modifizierer 11 den um eins erhöhten Wert aufnimmt, der dann wirksam wird bzw. bevor die Anfangsstellung «0» eingegeben wird, wenn am Ausgang von 8 noch ein Befehlszyklus TL anliegt – zeigt 9 eine um 1 niedrigere Zykluszeit an. Fig. 5 lässt im übrigen erkennen, dass der Befehlszyklenzähler 8 dem Befehlszyklenzähler 9 immer um einen Befehlszyklus voreilt.

Das Auftreten des Ereignisses CM führt infolge des Fliessbandeffekts zu einer besonderen Situation: Die Quellenselektionsdaten im Operationsregister 4 werden stets von den neuen Daten überschrieben, die zur Zeit der Feststellung des Ereignisses schon vorliegen. Eine solche Situation erfordert zwei Handlungen: Die erste ist die Durchführung einer erzwungenen Operation, im vorliegenden Fall das Nachladen des Hauptspeicherpuffers aus dem Hauptspeicher mit Daten, unter denen sich der im vorhergehenden Zyklus vermisste Operand befindet.

Die zweite Handlung ist eine Wiederholung der Befehls- und der Ausführungsphase. Die Befehlsphase (A 1TL) überlappt sich hierbei mit dem letzten Befehlsausführungszyklus der erzwungenen Operation, die zur Auflösung des Ereignisses eingeschaltet wurde. Während dieser Ausführungsphase wird, wie früher schon erwähnt wurde, die Auswahl der Quelle und des Zieles vorgenommen.

Die erzwungene Operation mit Wiederholung des letzten Befehlszyklus TL beginnt damit, dass die Adresse der erzwungenen Operation (Routine) in das Operationsregister für erzwungene Operationen FOP1 eingegeben wird. Durch das Auftreten des Ereignissignals CM wird der dem Operationsregister 5 zugeordnete Befehlszyklenzähler 9 über A* und das UND-Glied 48 gestoppt; sein Zählwert 2TL wird eingefroren. Die erzwungene Operation wird nun wie jede andere mikrobefehlscodierte Operation ausgeführt, jedoch mittels der in den Operationsregistern für erzwungene Operationen FOP1 und FOP2 enthaltenen Steuerinformation.

Wenn die Nachladeoperation abgeschlossen ist, im Beispiel der Fig. 5 ist dieses im fortlaufenden Befehlszyklus Ti+2 der Fall, dann wird die Quellenselektion des unterbrochenen Befehls wiederholt, indem das Operationsregister 5 als Quellenselektor verwendet wird, selbst wenn es normalerweise den Zielauswahldecoder 7 verwendet.

Durch die der binären Eins entsprechenden Steuersignale an den Steuereingängen 44a der Torschaltung 17a und 45a an der Torschaltung 18a wird nun der Inhalt des Operationsregisters 5 als effektive Operation EOP1 auf den Operationsdecodierer 6 geschaltet und somit die Quelle ausgewählt.

Im nächsten Zyklus Ti+3 wird der Ausgang des Operationsregisters 5 wieder als effektive Operation EOP2 auf den Operationsdecodierer 7 geschaltet, der die Zielselektion durchführt. Dieses ist deshalb möglich, weil an den ODER-Gliedern 31, 33, 34 und 35 wieder ein der binären Null entsprechendes Signal anliegt. Auf diese Weise wird ausschliesslich der Ausführungszyklus 2TL wiederholt, ohne dass Rückgriffregister oder duplizierte Schaltkreise erforderlich sind.

## Patentansprüche

1. Einrichtung im Befehlswerk eines Fliessbandprozessors zur Befehlsunterbrechung in Abhängigkeit von dem Auftreten eines Ereignisses, das eine solche Befehlsunterbrechung und eine Befehlswiederholung nach Auflösung des Ereignisses erfordert, dadurch gekennzeichnet, dass durch ein Ereignis der genannten Art kennzeichnendes Signal (z.B. CM) die in ersten Operationsregistern (4, 5) enthaltenen Befehle (z.B. mit den Adressen A, B) in den ersten Operationsregistern und die Inhalte (z.B. 1T0/TL, 2TL) der den jeweiligen Operationsregistern zugeordneten Befehlszyklenzähler (8, 9) in den Befehlszyklenzählern festgehalten werden, dass dann die in zweiten Operationsregistern (24 bis 27) gespeicherte, für das Ereignis spezfische Unterbrechungssteuerinformation (FOP1, FOP2) anstelle der Befehle in den ersten Operationsregistern und auch der Inhalt eines weiteren Befehlszyklenzählers (27), der den zweiten Operationsregistern zugeordnet ist, auf die Operationsdecodierer (6, 7) des Befehlswerkes zur Auflösung des Ereignisses geschaltet werden und dass nach Auflösung des Ereignisses der Inhalt des letzten (5) der ersten Operationsregister und des diesem zugeordneten Befehlszyklenzählers (9), der auf dem letzten Befehlszyklus (2TL) festgehalten wurde, für die Dauer eines Befehlszyklus auf den Ausgang des ersten (4) der ersten Operationsregister und damit auf den ersten (6) der Operationsdecodierer und danach wieder auf den zweiten Operationsdecodierer (7) geschaltet wird.

2. Einrichtung nach Anspruch 1, dadurch gekennzeichnet, dass zur Umschaltung des zweiten (5) der ersten Operationsregister eine Torschaltung (17a) in die Verbindung zwischen dem Ausgang des ersten (4) der ersten Operationsregister und dem Eingang des ersten Operationsdecodierers (6) eingeschaltet ist, die durch ein Signal am Steuereingang (44a) beim Auftreten eines Ereignisses so umgeschaltet wird, dass der im zweiten Operationsregister (5) befindliche Befehl zum ersten Operationsdecodierer (6) anstelle des im ersten Operationsregister (4) befindlichen Befehls gelangt und dass eine weitere Torschaltung (19a) zwischen dem Ausgang des zweiten Operationsregisters (5) und dem Eingang des zweiten Operationsdecodierers (7) eingeschaltet ist, die für die Dauer eines Zyklus die Übertragung des in dem zweiten Operationsregister befindlichen Befehls in den zweiten Operationsdecodierer verhindert.

3. Einrichtung nach Anspruch 2, dadurch gekennzeichnet, dass eine Torschaltung (48) vorgesehen ist, die bewirkt, dass der dem zweiten Operationsregister (5) zugeordnete Befehlszyklenzähler (9) für die Dauer der Durchführung erzwungener Operationen für die Auflösung von Ereignissen einfriert und dass nach Auflösung des Ereignisses der unterbrochene Befehl mit demjenigen Befehlszyklus (2TL) fortgesetzt wird, in dem er unterbrochen wurde.

4. Einrichtung nach Anspruch 3, dadurch gekennzeichnet, dass eine Schaltungsanordnung (31 bis 35 und 47) vorgesehen ist, die Steuersignale (z.B. A*, B*) erzeugt, welche in Abhängigkeit von Ereignissignalen (z.B. CM) und dem Inhalt der zweiten Operationsregister (24 bis 27, 28 bis 30) die genannten Torschaltungen (17, 18a; 19, 19a) sowie UND-Glieder (3, 12 und 13) steuern, die das Laden des Befehlsadressenregisters (2) sowie des ersten (4) und zweiten (5) der ersten Operationsregister, in Verbindung mit einer Schaltungsanordnung (20 bis 23) zur Identifizierung des letzten Befehlszyklus (TL) des gerade ablaufenden Befehls steuern.

## Claims

1. Device in the instruction unit of a pipeline processor for instruction interruption as a function of the appearance of an event necessitating such an instruction interruption and a repetition of an instruction after the resolution of the event, characterized in that by a signal (e.g. CM) identifying an event of the above specified type the instructions (e.g. with addresses A, B) comprised in the first operation registers (4, 5) are maintained in the first operation registers, and the contents (e.g. 1T0/TL, 2TL) of the instruction cycles counters (8, 9) associated to the respective operation registers are maintained in the instruction cycles counters, that subsequently the event-specific interrupt control information (FOP1, FOP2) stored in second operation registers (24 to 27) are transferred instead of the instructions in the first operation registers, and also the contents of a further instruction cycles counter (27) associated to the second operation registers, to the operation decoders (6, 7) of the instruction unit for resolution of the event, and that after the resolution of the event the contents of the last (5) of the first operation registers and of the instruction cycles counter (9) associated thereto that had been maintained on the last instruction cycle (2TL) are switched for the duration of an instruction cycle to the output of the first one (4) of the first operation registers, and thus to the first (6) of the operation decoders, and subsequently again to the second operation decoder (7).

2. Device as claimed in claim 1, characterized in that for switching the second (5) of the first operation registers a gate (17a) is inserted in the connection between the output of the first one (4) of the first operation registers and the input of the first operation decoder (6), which gate by a signal at the control input (44a) is switched upon the appearance of an event in such a manner that the instruction in the second operation register (5) reaches the first operation decoder (6) instead of the instruction in the first operation decoder (4), and that a second gate (19a) is provided between the output of the second operation register (5) and the input of the second operation decoder (7), which gate for the duration of a cycle prevents the transfer of the instruction in the second operation register into the second operation decoder.

3. Device as claimed in claim 2, characterized in that a gate (48) is provided by means of which the instruction cycles counter (9) associated to the second operation register (5) freezes for the duration of the forced operations for the resolution of events, and that after the resolution of the event the interrupted instruction is continued with that instruction cycle (2TL) in which it had been interrupted.

4. Device as claimed in claim 3, characterized in that a circuit arrangement (31 to 35 and 47) is provided which generates control signals (e.g. A*, B*) which as a function of event signals (e.g. CM) and the contents of the second operation register (24 to 27, 28 to 30) control the above gates (17, 17a; 19, 19a) as well as AND gates (3, 12 and 13) which control the loading of the instruction address register (2) as well as of the first (4) and second (5) of the first operation registers in connection with a circuit arrangement (20 to 23) for identifying the last instruction cycle (TL) of the current instruction.

## Revendications

1. Dispositif dans le circuit de commande d'un processeur en pipe-line pour interrompre une instruction en fonction de l'apparition d'un événement qui exige une telle interruption de l'instruction et une répétition de l'instruction après la cessation de l'événement, caractérisé en ce qu'un signal caractérisant un événement du type indiqué (par exemple, CM) fixe les instructions (par exemple, d'adresses A, B) contenues dans les premiers registres d'opérations (4, 5) dans les premiers registres d'opérations et les contenus (par exemple, 1T0/TL, 2TL) des compteurs de cycles d'instructions (8, 9) correspondant aux registres d'opérations respectifs, parmi les compteurs de cycles d'instructions, en ce que les informations de commande d'interruption (FOP1, FOP2) spécifiques pour l'élément, mémorisées dans de seconds registres d'opérations (24 à 27), au lieu des instructions contenues dans les premiers registres d'opérations, ainsi que le contenu d'un autre compteur de cycles d'instructions (27) qui correspond aux seconds registres d'opérations, sont transmis aux décodeurs d'opérations (6, 7) du dispositif de commande pour faire cesser l'événement, et en ce qu'après la cessation de l'événement, le contenu du dernier (5) des premiers registres d'opérations et du compteur de cycles d'instructions (9) qui lui correspond, qui a été maintenu sur le dernier cycle d'instructions (2TL), est transmis, pour la durée d'un cycle d'instructions, à la sortie du premier (4) des premiers registres d'opérations et, par suite, au premier (6) des décodeurs d'opérations et est ensuite de nouveau transmis au second décodeur d'opérations (7).

2. Dispositif selon la revendication 1, caractérisé en ce que, pour la commutation du second (5) des premiers registres d'opérations, un circuit de porte (17a) est intercalé dans la liaison entre la sortie du premier (4) des premiers registres d'opérations et l'entrée du premier décodeur d'opérations (6), qui est commuté par un signal présent à l'entrée de commande (44a), à l'apparition d'un événement, de telle façon que l'instruction présente dans le second registre d'opérations (5) parvient au premier décodeur d'opérations (6) au lieu de l'instruction présente dans le premier registre d'opérations (4), et en ce qu'un autre circuit de porte (19a) est intercalé entre la sortie du second registre d'opérations (5) et l'entrée du second décodeur d'opérations (7), circuit qui empêche, pour la durée d'un cycle, la transmission de l'instruction se trouvant dans le second registre d'opérations au second décodeur d'opérations.

3. Dispositif selon la revendication 2, caractérisé en ce qu'il est prévu un montage de porte (48) qui agit de telle façon que le compteur de cycles d'instructions (9) correspondant au second registre d'opérations (5) est bloqué pour la durée de l'exécution d'opérations forcées pour la cessation d'événements, et en ce qu'après la cessation de l'événement, l'instruction interrompue est poursuivie avec le cycle d'instructions (2TL) dans lequel elle a été interrompue.

4. Dispositif selon la revendication 3, caractérisé en ce qu'il comporte un montage (31 à 35 et 47) engendrant des signaux de commande (par exemple, A*, B*) qui commandent, en fonction de signaux d'événements (par exemple, CM) et du contenu du second registre d'opérations (24 à 27, 28 à 30) les montages de porte (17, 17a; 19, 19a) indiqués, ainsi que des circuits ET (3, 12 et 13) qui commandent le chargement du registre d'adresses d'instructions (2), ainsi que du premier (4) et du second (5) des premiers registres d'opérations, en liaison avec un montage (20 à 23) d'identification du dernier cycle d'instructions (TL) de l'instruction qui est justement en cours de déroulement.

FIG. 1

FIG. 2

FIG. 3

FIG. 4

0 134 831

FIG.5